# EUROPÄISCHE PATENTANMELDUNG

(11) **EP 1 961 305 A1**
(43) Veröffentlichungstag der Anmeldung: **27.08.2008**
(21) Anmeldenummer: 08010754.3
(22) Anmeldetag: 12.03.2005
(51) Int. Cl.: A01N 47/36

(54) **Verwendung von Sulfonylharnstoffen zur Bekämpfung von unerwünschtem Pflanzenwachstum**

(30) Priorität: 27.03.2004 DE 102004015140; 30.06.2004 DE 102004031346
(62) Teilanmeldung aus: 05716021.0
(71) Anmelder: Bayer CropScience AG, 40789 Monheim (DE)
(72) Erfinder: Krähmer, Hansjörg, Dr., 65719 Hofheim (DE); Hills, Martin, 65510 Idstein (DE); Dietrich, Hansjörg, Dr., 65719 Hofheim (DE); Waldraff, Christian, Dr., 61118 Bad Vilbel (DE); Feucht, Dieter, Dr., 65760 Eschborn (DE); Müller, Klaus-Helmut, Dr., 40593 Düsseldorf (DE); Philipp, Ulrich, Dr., Lees Summit, MO 64064 (US)

(57) **Zusammenfassung**

Die Erfindung betrifft die Verwendung von Verbindungen der allgemeinen Formel (I) und deren Salzen zur selektiven Bekämpfung von unerwünschtem Pflanzenwachstum in Leguminosen, oder zur nicht-selektiven Bekämpfung von unerwünschtem Pflanzenwuchs 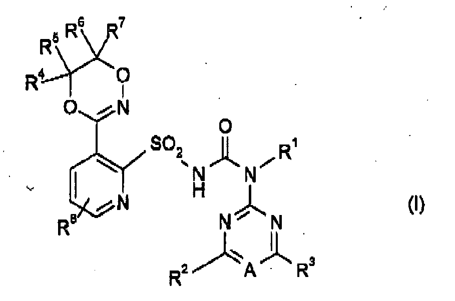 worin
A
für Stickstoff oder eine CR¹¹-Gruppierung steht,
wobei
R¹¹
für Wasserstoff, Alkyl, Halogen und Haloalkyl steht,

R¹
für Wasserstoff oder einen gegebenenfalls substituierten Rest aus der Reihe Alkyl, Alkoxy, Alkoxyalkyl, Alkenyl, Alkinyl, Cycloalkyl, Cycloalkylalkyl, Aralkyl und Aryl steht,
R²
für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
R³
für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
R⁴-R⁷
unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen stehen,
R⁸
für Wasserstoff, Halogen, Cyano, Thiocyanato oder für jeweils gegebenenfalls durch Halogen substituiertes Alkyl, Alkoxy; Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen steht,

wobei in den vorgenannten Resten die Alkyl- und Alkylengruppen jeweils 1 bis 6 C-Atome, die Alkenyl- und Alkinylgruppen jeweils 2 bis 6 C-Atome, die Cycloalkylgruppen jeweils 3 bis 6 C-Atome und die Arylgruppen jeweils 6 bzw. 10 C-Atome enthalten können.

## Beschreibung

Die Erfindung betrifft die Verwendung von speziellen Sulfonylharnstoffen zur nicht-selektiven Bekämpfung von unerwünschtem Pflanzenwuchs sowie zur selektiven Bekämpfung von unerwünschtem Pflanzenwachstum in Leguminosen.

Es ist bekannt, daß bestimmte N-Azinyl-N'-arylsulfonylharnstoffe mit einfachen offenkettigen Hydroxamsäureester-Gruppen im Arylteil, wie z.B. N-(4,6-Dimethylpyrimidin-2-yl)-N'-(2-methoxyaminocarbonyl-phenylsulfonyl)-harnstoff und der entsprechende -N'-(2-n-octyloxyaminocarbonylphenylsulfonyl)-harnstoff herbizide Eigenschaften aufweisen (vgl. DE-A-3 516 435, EP-A-173 958, US-4 704 158). Die Herbizidwirkung dieser bekannten Verbindungen ist jedoch nicht in allen Belangen zufriedenstellend.

Weiterhin sind auch bestimmte herbizid wirksame N-Azinyl-N'-(het)arylsulfonylharnstoffe bekannt, welche im (Het)arylteil durch O,O-dialkylierte, ebenfalls offenkettige Hydroxamsäure-Gruppen (vgl. EP-A-301 784) oder durch cyclisches Dioxazin (vgl. US 5,476,936) substituiert sind.

Die Aufgabe der vorliegenden Erfindung bestand in einer verbesserten Bekämpfung von unerwünschtem Pflanzenwuchs z.B. auch in Kulturpflanzen. Überraschend wurde gefunden, dass sich spezielle Verbindungen der Formel (I) und deren Salze als agrochemische Wirkstoffe zur verbesserten, insbesondere zur selektiven Bekämpfung von unerwünschtem Pflanzenwuchs in Leguminosen sowie zur nicht-selektiven Bekämpfung von unerwünschtem Pflanzenwuchs eignen.

Die vorliegende Erfindung betrifft somit die Verwendung von Verbindungen der allgemeinen Formel (I) und deren Salzen zur nicht-selektiven Bekämpfung von unerwünschtem Pflanzenwachstum oder zur selektiven Bekämpfung von unerwünschtem Pflanzenwuchs in Leguminosen 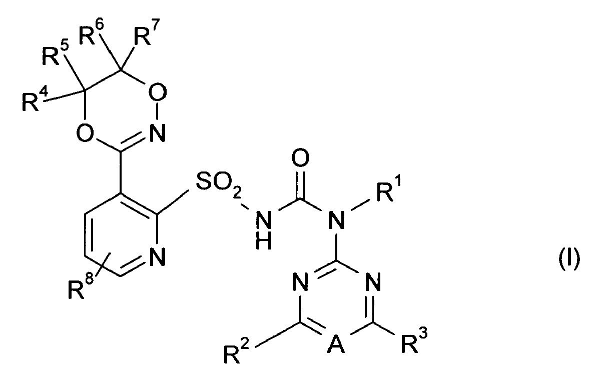 worin
- A: für Stickstoff oder eine CR¹¹-Gruppierung steht,
wobei
R¹¹ für Wasserstoff, Alkyl, Halogen und Haloalkyl steht,
- R¹: für Wasserstoff oder einen gegebenenfalls substituierten Rest aus der Reihe Alkyl, Alkoxy, Alkoxyalkyl, Alkenyl, Alkinyl, Cycloalkyl, Cycloalkylalkyl, Aralkyl und Aryl steht,
- R²: für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
- R³: für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
- R⁴ - R⁷: unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen stehen,
- R⁸: für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen steht,
wobei in den vorgenannten Resten die Alkyl- und Alkylengruppen jeweils 1 bis 6 C-Atome, die Alkenyl- und Alkinylgruppen jeweils 2 bis 6 C-Atome, die Cycloalkylgruppen jeweils 3 bis 6 C-Atome und die Arylgruppen jeweils 6 bzw. 10 C-Atome enthalten können.

Die Verbindungen der Formel (I) und deren Salze sind bekannt, ebenso wie deren Herstellung, z.B. aus US 5,476,936 die hiermit in die vorliegende Beschreibung aufgenommen wird.

Gegenstand der Erfindung ist vorzugsweise die Verwendung von Verbindungen der Formel (I) und deren Salzen,
worin
- A: für Stickstoff oder eine CH-Gruppierung steht,
- R¹: für Wasserstoff oder einen gegebenenfalls durch Halogen substituierten Rest aus der Reihe Alkyl, Alkoxy, Alkoxyalkyl, Alkenyl und Alkinyl mit jeweils bis zu 3 Kohlenstoffatomen steht,
- R²: für Wasserstoff, Halogen oder für jeweils gegebenenfalls durch Halogen substituiertes Alkyl, Alkoxy, Alkylthio, Alkylamino oder Dialkylamino mit jeweils 1 bis 3 Kohlenstoffatomen in den Alkylresten steht,
- R³: für Wasserstoff, Halogen oder für jeweils gegebenenfalls durch Halogen substituiertes Alkyl, Alkoxy, Alkylthio, Alkylamino oder Dialkylamino mit jeweils 1 bis 3 Kohlenstoffatomen in den Alkylresten steht,
- R⁴ - R⁷: unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl oder Alkylaminocarbonyl mit jeweils 1 bis 3 Kohlenstoffatomen in den Alkylresten steht,
- R⁸: für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl oder Alkylaminocarbonyl mit jeweils 1 bis 3 Kohlenstoffatomen in den Alkylresten steht.

Die Erfindung betrifft weiter vorzugsweise die Verwendung von Salzen, die man aus Verbindungen der Formel (I) und Basen, wie z.B. Natrium-, Kalium- oder Calciumhydroxid, -hydrid, -amid und -carbonat, Natrium- oder Kalium-C₁-C₄-alkanolaten, Ammoniak, C₁-C₄-Alkylaminen, Di-(C₁-C₄-alkyl)-aminen oder Tri-(C₁-C₄-alkyl)-aminen, nach üblichen Verfahren erhält.

Die Erfindung betrifft insbesondere die Verwendung von Verbindungen der Formel (I) und deren Salzen,
worin
- A: für Stickstoff oder eine CH-Gruppierung steht,
- R¹: für Wasserstoff, Methyl, Ethyl, Methoxy, Methoxymethyl oder Ethoxy steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴ - R⁷: unabhängig voneinander für Wasserstoff, Fluor, Chlor, Cyano, oder für jeweils gegebenenfalls durch Chlor oder Fluor substituiertes Methyl, Methylthio, Methylsulfinyl, Methylsulfonyl, Methoxycarbonyl und Ethoxycarbonyl steht, vorzugsweise für Wasserstoff,
- R⁸: für Wasserstoff, Fluor, Chlor, Brom, Cyano oder für jeweils gegebenenfalls durch Chlor oder Fluor substituiertes Methyl, Methoxy, Ethoxy, Methylthio, Ethylthio, Methylsulfinyl, Ethylsulfinyl, Methylsulfonyl, Ethylsulfonyl, Methyl-oder Dimethylamino steht, vorzugsweise für Wasserstoff.

Die Erfindung betrifft besonders bevorzugt die Verwendung von Verbindungen der Formel (I) und deren Salzen, insbesondere deren Alkalimetallsalzen,
worin
- A: für Stickstoff steht,
- R¹: für Wasserstoff oder Methyl steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴ - R⁷: für Wasserstoff steht,
- R⁸: für Wasserstoff steht.

Die Erfindung betrifft ebenfalls besonders bevorzugt die Verwendung von Verbindungen der Formel (I) und deren Salzen, insbesondere deren Alkalimetallsalzen,
worin
- A: für eine CH-Gruppierung steht,
- R¹: für Wasserstoff oder Methyl steht,
- R²: für Wasserstoff, Chlor, Methyl, Ethyl, Trifluoromethyl, Methoxy, Ethoxy, Difluoromethoxy, Methylthio, Methylamino oder Dimethylamino steht,
- R³: für Wasserstoff, Chlor, Methyl, Ethyl, Trifluoromethyl, Methoxy, Ethoxy, Difluoromethoxy, Methylthio, Methylamino oder Dimethylamino steht,
- R⁴ - R⁷: für Wasserstoff steht,
- R⁸: für Wasserstoff steht.

Die oben aufgeführten allgemeinen oder in Vorzugsbereichen aufgeführten Restedefinitionen können untereinander, also auch zwischen den angegebenen bevorzugten Bereichen beliebig kombiniert werden.

Die bei den Restedefinitionen genannten Kohlenwasserstoffreste, wie Alkyl, Alkenyl oder Alkinyl, auch in Kombinationen mit Heteroatomen, wie in Alkoxy, Alkylthio, Haloalkyl oder Alkylamino, sind auch dann, wenn dies nicht ausdrücklich angegeben ist, geradkettig oder verzweigt.

Aus den Verbindungen der allgemeinen Formel (I) können gegebenenfalls Salze hergestellt werden, z.B. Metallsalze wie Alkali (z.B. Na, K) -Salze oder Erdalkali (z.B.

Ca, Mg) -Salze oder Ammonium- oder Aminsalze. Man erhält solche Salze in einfacher Weise nach üblichen Salzbildungsmethoden, beispielsweise durch Lösen oder Dispergieren einer Verbindung der Formel (I) in einem geeigneten Verdünnungsmittel, wie z.B. Methylenchlorid, Aceton, tert.-Butyl-methylether oder Toluol, und Zugabe einer geeigneten Base. Die Salze können dann - gegebenenfalls nach längerem Rühren - durch Einengen oder Absaugen isoliert werden.

Erfindungsgemäß bevorzugt verwendete Wirkstoffe sind in der nachfolgenden Tabelle genannt, worin folgende Abkürzungen verwendet werden:
Smp.: = Schmelzpunkt
⁽⁺⁾ = Der angegebene Schmelzpunkt (Smp.) bezieht sich jeweils auf das entsprechende Natriumsalz, d.h. die entsprechende Verbindung, worin der Wasserstoff der -SO₂-NH-Gruppe durch Natrium ersetzt ist.

**Tabelle 1: Beispiele für Verbindungen der Formel (I) mit R⁴=R⁵=R⁶=R⁷=R⁸=H:**

| Bsp.-Nr. | R¹ | A | R² | R³ | Smp. (°C) |
|---|---|---|---|---|---|
| I-1 | H | CH | OCH₃ | OC₂H₅ | 154 |
| I-2 | H | CH | OCH₃ | CH₃ | |
| I-3 | H | CH | OHC₃ | CH₃ | 180-181⁽⁺⁾ |
| I-4 | H | CH | OCH₃ | C₂H₅ | |
| I-5 | H | CH | OCH₃ | CF₃ | |
| I-6 | H | CH | OCH₃ | OCF₂H | |
| I-7 | H | CH | OCH₃ | NHCH₃ | |
| I-8 | H | CH | OCH₃ | N(CH₃)₂ | 199.5 |
| I-9 | H | CH | OCH₃ | Cl | 110-111 |
| I-10 | H | CH | OCH₃ | Cl | 175-178⁽⁺⁾ |
| I-11 | H | CH | OCH₃ | OCH₃ | 167-168 |
| I-12 | H | CH | OCH₃ | OCH₃ | 171-172⁽⁺⁾ |
| I-13 | H | CH | OC₂H₅ | OC₂H₅ | |
| I-14 | H | CH | OC₂H₅ | OC₂H₅ | 152-154⁽⁺⁾ |
| I-15 | H | CH | OC₂H₅ | CH₃ | |
| I-16 | H | CH | OC₂H₅ | C₂H₅ | |
| I-17 | H | CH | OC₂H₅ | CF₃ | |
| I-18 | H | CH | OC₂H₅ | OCF₂H | |
| I-19 | H | CH | OC₂H₅ | NHCH₃ | |
| I-20 | H | CH | OC₂H₅ | N(CH₃)₂ | |
| I-21 | H | CH | OC₂H₅ | Cl | 158-159 |
| I-22 | H | CH | OC₂H₅ | Cl | 213⁽⁺⁾ |
| I-23 | H | CH | CH₃ | CH₃ | 153 |
| I-24 | H | CH | CH₃ | C₂H₅ | |
| I-25 | H | CH | CH₃ | CF₃ | |
| I-26 | H | CH | CH₃ | OCF₂H | |
| I-27 | H | CH | CH₃ | NHCH₃ | |
| I-28 | H | CH | CH₃ | N(CH₃)₂ | |
| I-29 | H | CH | CH₃ | Cl | 108-109 |
| I-30 | H | CH | CH₃ | Cl | >300⁽⁺⁾ |
| I-31 | H | CH | C₂H₅ | C₂H₅ | |
| I-32 | H | CH | C₂H₅ | CF₃ | |
| I-33 | H | CH | C₂H₅ | OCF₂H | |
| I-34 | H | CH | C₂H₅ | NHCH₃ | |
| I-35 | H | CH | C₂H₅ | Cl | |
| I-36 | H | CH | CF₃ | CF₃ | |
| I-37 | H | CH | CF₃ | OCF₂H | |
| I-38 | H | CH | CF₃ | NHCH₃ | |
| I-39 | H | CH | CF₃ | N(CH₃)₂ | |
| I-40 | H | CH | CF₃ | Cl | |
| I-41 | H | CH | OCF₂H | OCF₂H | |
| I-42 | H | CH | OCF₂H | NHCH₃ | |
| I-43 | H | CH | OCF₂H | N(CH₃)₂ | |
| I-44 | H | CH | OCF₂H | CI | |
| I-45 | H | CH | NHCH₃ | NHCH₃ | |
| I-46 | H | CH | NHCH₃ | N(CH₃)₂ | |
| I-47 | H | CH | NHCH₃ | CI | |
| I-48 | H | CH | N(CH₃)₂ | N(CH₃)₂ | |
| I-49 | H | CH | N(CH₃)₂ | CI | |
| I-50 | H | CH | CI | CI | |
| I-51 | H | N | OCH₃ | OCH₃ | 255 |
| I-52 | H | N | OCH₃ | OCH₃ | 159-162⁽⁺⁾ |
| I-53 | H | N | OCH₃ | OC₂H₅ | |
| I-54 | H | N | OCH₃ | CH₃ | |
| I-55 | H | N | OCH₃ | C₂H₅ | |
| I-56 | H | N | OCH₃ | CF₃ | |
| I-57 | H | N | OCH₃ | OCF₂H | |
| I-58 | H | N | OCH₃ | NHCH₃ | |
| I-59 | H | N | OCH₃ | N(CH₃)₂ | |
| I-60 | H | N | OCH₃ | N(CH₃)₂ | 156⁽⁺⁾ |
| I-61 | H | N | OCH₃ | Cl | |
| I-62 | H | N | OC₂H₅ | OC₂H₅ | |
| I-63 | H | N | OC₂H₅ | CH₃ | |
| I-64 | H | N | OC₂H₅ | C₂H₅ | |
| I-65 | H | N | OC₂H₅ | CF₃ | |
| I-66 | H | N | OC₂H₅ | OCF₂H | |
| 1-67 | H | N | OC₂H₅ | NHCH₃ | |
| I-68 | H | N | OC₂H₅ | N(CH₃)₂ | |
| I-69 | H | N | OC₂H₅ | Cl | |
| I-70 | H | N | OC₂H₅ | Cl | 213⁽⁺⁾ |
| I-71 | H | N | CH₃ | CH₃ | |
| I-72 | H | N | CH₃ | C₂H₅ | |
| I-73 | H | N | CH₃ | CF₃ | |
| I-74 | H | N | CH₃ | OCF₂H | |
| I-75 | H | N | CH₃ | NHCH₃ | |
| I-76 | H | N | CH₃ | N(CH₃)₂ | |
| I-77 | H | N | CH₃ | Cl | |
| I-78 | H | N | C₂H₅ | C₂H₅ | |
| I-79 | H | N | C₂H₅ | CF₃ | |
| I-80 | H | N | C₂H₅ | OCF₂H | |
| I-81 | H | N | C₂H₅ | NHCH₃ | |
| I-82 | H | N | C₂H₅ | CI | |
| I-83 | H | N | CF₃ | CF₃ | |
| I-84 | H | N | CF₃ | OCF₂H | |
| I-85 | H | N | CF₃ | NHCH₃ | |
| I-86 | H | N | CF₃ | N(CH₃)₂ | |
| I-87 | H | N | CF₃ | CI | |
| I-88 | H | N | OCF₂H | OCF₂H | |
| I-89 | H | N | OCF₂H | NHCH₃ | |
| I-90 | H | N | OCF₂H | N(CH₃)₂ | |
| I-91 | H | N | OCF₂H | CI | |
| I-92 | H | N | NHCH₃ | NHCH₃ | |
| I-93 | H | N | NHCH₃ | N(CH₃)₂ | |
| I-94 | H | N | NHCH₃ | CI | |
| I-95 | H | N | N(CH₃)₂ | N(CH₃)₂ | |
| I-96 | H | N | N(CH₃)₂ | CI | |
| I-97 | H | N | CI | CI | |
| I-98 | CH₃ | N | OCH₃ | OCH₃ | |
| I-99 | CH₃ | N | OCH₃ | OC₂H₅ | |
| I-100 | CH₃ | N | OCH₃ | CH₃ | |
| I-101 | CH₃ | N | OCH₃ | C₂H₅ | |
| I-102 | CH₃ | N | OCH₃ | CF₃ | |
| I-103 | CH₃ | N | OCH₃ | OCF₂H | |
| I-104 | CH₃ | N | OCH₃ | NHCH₃ | |
| I-105 | CH₃ | N | OCH₃ | N(CH₃)₂ | |
| I-106 | CH₃ | N | OCH₃ | Cl | |
| I-107 | CH₃ | N | OC₂H₅ | OC₂H₅ | |
| I-108 | CH₃ | N | OC₂H₅ | CH₃ | |
| I-109 | CH₃ | N | OC₂H₅ | C₂H₅ | |
| I-110 | CH₃ | N | OC₂H₅ | CF₃ | |
| I-111 | CH₃ | N | OC₂H₅ | OCF₂H | |
| I-112 | CH₃ | N | OC₂H₅ | NHCH₃ | |
| I-113 | CH₃ | N | OC₂H₅ | N(CH₃)₂ | |
| I-114 | CH₃ | N | OC₂H₅ | CI | |
| I-115 | CH₃ | N | CH₃ | CH₃ | |
| I-116 | CH₃ | N | CH₃ | C₂H₅ | |
| I-117 | CH₃ | N | CH₃ | CF₃ | |
| I-118 | CH₃ | N | CH₃ | OCF₂H | |
| I-119 | CH₃ | N | CH₃ | NHCH₃ | |
| 1-120 | CH₃ | N | CH₃ | N(CH₃)₂ | |
| I-121 | CH₃ | N | CH₃ | Cl | |
| I-122 | CH₃ | N | C₂H₅ | C₂H₅ | |
| I-123 | CH₃ | N | C₂H₅ | CF₃ | |
| I-124 | CH₃ | N | C₂H₅ | OCF₂H | |
| I-125 | CH₃ | N | C₂H₅ | NHCH₃ | |
| I-126 | CH₃ | N | C₂H₅ | Cl | |
| I-127 | CH₃ | N | CF₃ | CF₃ | |
| I-128 | CH₃ | N | CF₃ | OCF₂H | |
| I-129 | CH₃ | N | CF₃ | NHCH₃ | |
| I-130 | CH₃ | N | CF₃ | N(CH₃)₂ | |
| I-131 | CH₃ | N | CF₃ | Cl | |
| I-132 | CH₃ | N | OCF₂H | OCF₂H | |
| I-133 | CH₃ | N | OCF₂H | NHCH₃ | |
| 1-134 | CH₃ | N | OCF₂H | N(CH₃)₂ | |
| I-135 | CH₃ | N | OCF₂H | Cl | |
| I-136 | CH₃ | N | NHCH₃ | NHCH₃ | |
| I-137 | CH₃ | N | NHCH₃ | N(CH₃)₂ | |
| I-138 | CH₃ | N | NHCH₃ | Cl | |
| I-139 | CH₃ | N | N(CH₃)₂ | N(CH₃)₂ | |
| I-140 | CH₃ | N | N(CH₃)₂ | Cl | |
| I-141 | CH₃ | N | Cl | Cl | |
| I-142 | H | N | N(CH₃)₂ | OCH₂CF₃ | 158 |
| I-143 | H | CH | Cl | OCH₂CF₃ | 204-205 |
| I-144 | H | CH | Cl | OCH₂CF₃ | |
| I-145 | H | CH | Cl | OCH₂CF₃ | 207⁽⁺⁾ |

Die Verbindungen der Formel (I) und deren Salze können zur Bekämpfung von unerwünschtem Pflanzenwuchs verwendet werden. Unter unerwünschten Pflanzen sind alle Pflanzen zu verstehen, die an Orten wachsen, wo sie unerwünscht sind. Dies können z.B. Schadpflanzen (z.B. Unkräuter oder unerwünschte Kulturpflanzen) sein, z.B. auch solche, die gegen bestimmte herbizide Wirkstoffe wie Glyphosate, Atrazin, Glufosinate oder Imidazolinon-Herbizide resistent sind. Die Verbindungen der Formel (I) können z.B. gegen folgende Pflanzen verwendet werden:

Monokotyle Unkräuter, z.B. der Gattungen Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Dikotyle Unkräuter, z.B. der Gattungen Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum, Euphorbia.

Monokotyle Kulturpflanzen, z.B. monokotyle transgene und nicht transgene Kulturpflanzen, z.B. der Gattungen Oryza, Zea, Triticum, Hordeum, Avena, Secale, Sorghum, Panicum, Saccharum, Ananas, Asparagus, Allium.

Dikotyle Kulturpflanzen, z.B. der Gattungen Gossypium, Beta, Solanum, Nicotiana, Lycopersicon, Brassica, Lactuca, Cucumis, Cucurbita.

Die Verwendung der Verbindungen der Formel (I) und deren Salze ist jedoch keineswegs auf diese Gattungen beschränkt, sondern erstreckt sich in gleicher Weise auch auf andere, von Leguminosen verschiedene Pflanzen.

Die Verbindungen der Formel (I) und deren Salze weisen eine ausgezeichnete Selektivität in Kulturen von Leguminosen auf. Sie eignen sich z.B. zur selektiven Bekämpfung von unerwünschtem Pflanzenwuchs, z.B. von Schadpflanzen (z.B. monokotylen und dikotylen Unkräutern oder unerwünschten Kulturpflanzen), in Kulturen von transgenen und nicht-transgenen Leguminosen, insbesondere der Gattung Glycine, beispielsweise im Vorsaat-Verfahren, Vorauflauf-Verfahren oder im Nachauflauf-Verfahren.

Als Leguminosen kommen z.B. transgene und nicht-transgene Leguminosen z.B. der Gattungen Glycine, Phaseolus, Pisum, Vicia und Arachis in Frage. Bevorzugt kommen Leguminosen der Gattung Glycine in Frage, z.B. der Art Glycine max. (Soja) wie nicht-transgene Glycine max. (z.B. konventionelle Sorten wie STS-Sorten) oder transgene Glycine max. (z.B. RR-Soja oder LL-Soja) und deren Kreuzungen.

Die Verbindungen der Formel (I) und deren Salze können auch nicht-selektiv zur Bekämpfung unerwünschten Pflanzenwuchses eingesetzt werden, z.B. in Dauer-und Plantagenkulturen, an Wegrändern, Plätzen, Industrieanlagen, Flugplätzen oder Eisenbahnanlagen, oder zur sogenannten Burn-Down-Anwendung, z.B. in Ackerbaukulturen z.B. monokotylen Ackerbaukulturen wie Getreide (z.B. Weizen, Gerste, Roggen, Hafer), Reis, Mais, Hirse, oder dikotylen Ackerbaukulturen wie Zuckerrübe, Raps, Baumwolle, Sonnenblumen und Leguminosen z.B. der Gattungen Glycine (z.B. Glycine max. (Soja) wie nicht-transgene Glycine max. (z.B. konventionelle Sorten wie STS-Sorten) oder transgene Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel. Dabei erfolgt die Applikation bevorzugt auf die aufgelaufenen Schadpflanzen (z.B. Unkräuter oder unerwünschte Kulturpflanzen), insbesondere vor dem Auflaufen der (erwünschten) Kulturpflanzen.

Als Dauer- und Plantagenkulturen kommen z.B. Kern- und Steinobst, Beerenobst, Wein, Hevea, Bananen, Zuckerrohr, Kaffee, Tee, Citrus, Nussplantagen, Rosen, Palmenkulturen und Forstkulturen in Betracht.

Eine bevorzugte Verwendung im nicht-selektiven Bereich ist die Burn-down-Anwendung in Kulturpflanzen, wobei die Verbindungen der Formel (I) und deren Salze vor dem Auflaufen der Kulturpflanzen auf die aufgelaufenen Schadpflanzen appliziert werden, bevorzugt ist dabei die Applikation vor der Aussaat der Kulturpflanzen oder bei der Aussaat der Kulturpflanzen.

Die Verbindungen der Formel (I) und deren Salze können in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen. Die Formulierungen können die üblichen Hilfs- und Zusatzstoffe enthalten.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel könne z.B. auch organische Lösungsmittel als Hilfslösungsmittel verwendet werden. Als flüssige Lösungsmittel kommen im wesentlichen infrage: Aromaten, wie Xylol, Toluol, Alkylnaphthaline, chlorierte Aromaten oder chlorierte aliphatische Kohlenwasserstoffe, wie Chlorbenzole, Chlorethylene, oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid oder Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quartz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier-und/oder schaumerzeugende Mittel kommen infrage: z.B. nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen infrage: z.B. Ligninsulfitablaugen und Methylcellulose.

Es können in den Formulierungen Haftmittel wie Carboxymethylcellulose, natürliche und synthetische, pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Wirkstoffe der Formel (I) und deren Salze können als solche oder in ihren Formulierungen auch in Mischung mit anderen agrochemischen Wirkstoffen wie bekannten Herbiziden zur Bekämpfung von unerwünschtem Pflanzenwuchs, z.B. zur Unkrautbekämpfung oder zur Bekämpfung von unerwünschten Kulturpflanzen Verwendung finden, wobei z.B. Fertigformulierungen oder Tankmischungen möglich sind.
Als Kombinationspartner für die Wirkstoffe der Formel (I) und deren Salze, z.B. in Mischungsformulierungen oder im Tank-Mix, sind beispielsweise bekannte agrochemische Wirkstoffe einsetzbar, wie sie in z.B. Weed Research 26, 441-445 (1986), oder "The Pesticide Manual", 13th edition, The British Crop Protection Council, 2003, und dort zitierter Literatur beschrieben sind. Als literaturbekannte Herbizide, die mit den Wirkstoffen der Formel (I) und deren Salzen kombiniert werden können, sind z.B. folgende Wirkstoffe zu nennen (Anmerkung: Die Verbindungen dabei sind entweder mit dem "common name" nach der International Organization for Standardization (ISO) oder mit dem chemischen Namen, ggf. zusammen mit einer üblichen Codenummer bezeichnet und umfassen stets sämtliche Anwendungsformen wie Säuren, Salze, Ester und Isomere wie Stereoisomere und optische Isomere. Dabei sind eine und zum Teil auch mehrere Anwendungsformen genannt): 2,4-D, Acetochlor, Acifluorfen, Acifluorfen-sodium, Aclonifen, Alachlor, Alloxydim, Alloxydim-sodium, Ametryn, Amicarbazone, Amidosulfuron, Aminopyralid, Amitrole, Anilofos, Asulam, Atrazine, Azafenidin, Azimsulfuron, Beflubutamid, Benazolin, Benazolin-ethyl, Benfuresate, Bensulfuron-methyl, Bentazone, Benzfendizone, Benzobicyclon, Benzofenap, Bifenox, Bilanafos, Bispyribac-sodium, Bromacil, Bromobutide, Bromofenoxim, Bromoxynil, Butachlor, Butafenacil, Butenachlor, Butralin, Butroxydim, Butylate, Cafenstrole, Carbetamide, Carfentrazone-ethyl, Chlomethoxyfen, Chloridazon, Chlorimuron-ethyl, Chlornitrofen, Chlorotoluron, Chlorsulfuron, Cinidon-ethyl, Cinmethylin, Cinosulfuron, Clefoxydim, Clethodim, Clodinafop-propargyl, Clomazone, Clomeprop, Clopyralid, Cloransulam-methyl, Cumyluron, Cyanazine, Cyclosulfamuron, Cycloxydim, Cyhalofop-butyl, Desmedipham, Dicamba, Dichlobenil, Dichlorprop, Dichlorprop-P, Diclofop-methyl, Diclosulam, Difenzoquat, Diflufenican, Diflufenzopyr, Dikegulac-sodium, Dimefuron, Dimepiperate, Dimethachlor, Dimethametryn, Dimethenamid, Triaziflam, Diquatdibromide, Dithiopyr, Diuron, Dymron, EPTC, Esprocarb, Ethalfluralin, Ethametsulfuron-methyl, Ethofumesate, Ethoxyfen, Ethoxysulfuron, Etobenzanid, Fenoxaprop-ethyl, Fenoxaprop-P-ethyl, Fentrazamide, Flamprop-M-isopropyl, Flamprop-M-methyl, Flazasulfuron, Florasulam, Fluazifop, Fluazifop-butyl, Fluazifop-butyl, Fluazolate, Flucarbazone-sodium, Flucetosulfuron, Fluchloralin, Flufenacet, Flufenpyr, Flumetsulam, Flumiclorac-pentyl, Flumioxazin, Fluometuron, Fluorochloridone, Fluoroglycofen-ethyl, Flupoxam, Flupyrsulfuron-methyl-sodium, Fluridone, Fluroxypyr, Fluroxypyr-butoxypropyl, Fluroxypyr-meptyl, Flurprimidol, Flurtamone, Fluthiacet-methyl, Fomesafen, Foramsulfuron, Glufosinate, Glufosinateammonium, Glyphosate, Halosulfuron-methyl, Haloxyfop, Haloxyfop-ethoxyethyl, Haloxyfop-methyl, Haloxyfop-P-methyl, Hexazinone, Imazamethabenz-methyl, Imazamox, Imazapic, Imazapyr, Imazaquin, Imazethapyr, Imazosulfuron, Indanofan, lodosulfuron-methyl-sodium, loxynil, Isoproturon, Isouron, Isoxaben, Isoxachlortole, Isoxaflutole, Ketospiradox, Lactofen, Lenacil, Linuron, MCPA, Mecoprop, Mecoprop-P, Mefenacet, Mesosulfuron-methyl, Mesotrione, Metamifop, Metamitron, Metazachlor, Methabenzthiazuron, Methyldymron, Metobromuron, Metolachlor, Metosulam, Metoxuron, Metribuzin, Metsulfuron-methyl, Molinate, Monolinuron, Naproanilide, Napropamide, Neburon, Nicosulfuron, Norflurazon, Orbencarb, Oryzalin, Oxadiargyl, Oxadiazon, Oxasulfuron, Oxaziclomefone, Oxyfluorfen, Paraquat, Pelargonic acid, Pendimethalin, Pendralin, Penoxsulam, Pentoxazone, Pethoxamid, Phenmedipham, Picloram, Picolinafen, Pinoxaden, Piperophos, Pretilachlor, Primisulfuron-methyl, Profluazol, Profoxydim, Prometryn, Propachlor, Propanil, Propaquizafop, Propisochlor, Propoxycarbazone-sodium, Propyzamide, Prosulfocarb, Prosulfuron, Pyraclonil, Pyraflufen-ethyl, Pyrazolate, Pyrazosulfuronethyl, Pyrazoxyfen, Pyribenzoxim, Pyributicarb, Pyridafol, Pyridate, Pyriftalid, Pyriminobac-methyl, Pyrithiobac-sodium, Quinclorac, Quinmerac, Quinoclamine, Quizalofop-ethyl, Quizalofop-P-ethyl, Quizalofop-P-tefuryl, Rimsulfuron, Sethoxydim, Simazine, Simetryn, S-Metolachlor, Sulcotrione, Sulfentrazone, Sulfometuronmethyl, Sulfosate, Sulfosulfuron, Tebuthiuron, Tepraloxydim, Terbuthylazine, Terbutryn, Thenylchlor, Thiazopyr, Thifensulfuron-methyl, Thiobencarb, Tiocarbazil, Tralkoxydim, Triallate, Triasulfuron, Tribenuron-methyl, Triclopyr, Tridiphane, Trifloxysulfuron, Trifluralin, Triflusulfuron-methyl und Tritosulfuron.

Als Kombinationspartner kommen vorzugsweise Verbindungen in Frage, die selektiv in Soja sind, beispielsweise
- (Ba): selektiv in Soja gegen monokotyle und dikotyle Schadpflanzen wirksame Herbizide, beispielsweise Trifluralin, Metribuzin, Clomazone, Pendimethalin, Metolachlor, Flumetsulam, Dimethenamid, Linuron, Ethalfluralin, Flufenacet, Norflurazon, Vernolate, Chlortoluron, Chlorotoluron, Cloransulam und Ester wie der Methylester, Imazethapyr, Imazamox, Imazaquin,
- (Bb): selektiv in Soja gegen dikotyle Schadpflanzen wirksame Herbizide, beispielsweise Sulfentrazone, Bentazone, Thifensulfuron und dessen Ester, insbesondere der Methylester, Oxyfluorfen, Lactofen, Fomesafen, Flumiclorac und dessen Ester wie der Pentylester, Acifluorfen und dessen Natriumsalz, 2,4-DB und dessen Ester und Salze, Flumioxazin, Benazolin, 2,4-D und dessen Ester und Salze Chlorimuron und dessen Ester und Salze wie Chlorimuron-ethyl,
- (Bc): selektiv in Soja gegen monokotyle Schadpflanzen wirksame Herbizide, beispielsweise Sethoxydim, Cycloxydim, Clethodim, Quizalofop-P und dessen Ester wie der Ethyl- oder Tefurylester, Fenoxaprop-P und dessen Ester wie der Ethylester, Fluazifop-P und dessen Ester wie der Butylester, Haloxyfop und Haloxyfop-P und deren Ester wie der Methyl- oder der -etotylester, Propaquizafop, Alachlor,
- (Bd): nicht selektive, z.B. auch zu spezifischen Zwecken in Soja einsetzbare Herbizide, z. B. Glufosinate, Glyphosate, Paraquat (Salze) wie Paraquatdichlorid,

Ebenfalls bevorzugte Kombinationspartner sind Benozalin, Fenoxaprop, Lactofen, Chlortoluron, Flufenacet, Metribuzin, Benfuresate, Fentrazamid, Mefenacet, Diclofop, loxynil, Bromoxynil, Amidosulfuron, Flurtamone, Diflufenican, Ethoxysulfuron, Flucarbazone, Propoxycarbazone, Sulcotrione, Mesotrione, Isoproturon, lodosulfuron, Mesosulfuron, Foramsulfuron, Anilofos, Oxaziclomefone, Oxadiargyl, Isoxaflutole, Linuron.

Auch Mischungen mit anderen bekannten Wirkstoffen, wie Fungiziden, Insektiziden, Akariziden, Nematiziden, Safenern, Schutzstoffen gegen Vogelfraß, Pflanzennährstoffen und Bodenstrukturverbesserungsmitteln sind möglich.

Die Wirkstoffe der Formel (I) und deren Salze können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die vorliegende Erfindung betrifft weiterhin ein Verfahren zur Bekämpfung von unerwünschtem Pflanzenwachstum (z.B. zur nicht-selektiven Bekämpfung von Schadpflanzen oder zur selektiven Bekämpfung von Schadpflanzen in Leguminosen), wobei eine oder mehrere Verbindungen der Formel (I) und deren Salze auf die Pflanzen (z.B. Schadpflanzen wie mono- oder dikotyle Unkräuter oder unerwünschte Kulturpflanzen), das Saatgut (z.B. Körner, Samen oder vegetative Vermehrungsorgane wie Knollen oder Sprossteile mit Knospen) oder die Fläche auf der die Pflanzen wachsen (z.B. die Anbaufläche) appliziert werden. Sie können z.B. vor der Saat, sowie vor als auch nach dem Auflaufen der Pflanzen appliziert werden. Die Vorsaatapplikation kann z.B. durch Spritzen oder Einarbeitung in den Boden erfolgen. Auch Splitapplikationen z.B. im frühen Vorauflauf gefolgt von späterer Nachauflaufapplikation sind möglich. Bevorzugt ist eine Applikation auf die aufgelaufenen Schadpflanzen, insbesondere vor dem Auflaufen von (erwünschten) Kulturpflanzen wie Leguminosen.

Bevorzugt für die selektive Anwendung in Leguminosen ist eine Applikation auf aufgelaufene Pflanzen, insbesondere auf aufgelaufene Schadpflanzen (z.B. Unkräuter oder unerwünschte Kulturpflanzen), bevorzugt vor dem Auflaufen der Leguminosen. Bevorzugt für die nicht-selektive Anwendung ist die Applikation auf die aufgelaufenen Schadpflanzen (z.B. Unkräuter oder unerwünschte Kulturpflanzen). Bei der Burn-down-Anwendung wird dabei bevorzugt vor der Aussaat oder bei der Aussaat der Kulturpflanzen auf die aufgelaufenen Schadpflanzen appliziert.

Die angewandte Wirkstoffmenge kann in einem größeren Bereich schwanken. Sie hängt im wesentlichen von der Art des gewünschten Effektes ab. Im allgemeinen liegen die Aufwandmengen zwischen 0,01 g und 100 g Wirkstoff pro Hektar Bodenfläche. Für eine selektive Anwendung bevorzugt sind im allgemeinen niedrigere Aufwandmengen, z.B. im Bereich von 0,01 g bis 9 g Wirkstoff pro Hektar, vorzugsweise zwischen 0,1 g und 5 g pro Hektar, insbesondere in der Applikation auf aufgelaufene Pflanzen, insbesondere auf aufgelaufene Schadpflanzen (z.B. Unkräuter oder unerwünschte Kulturpflanzen). Für die nicht-selektive Anwendung bevorzugt sind im allgemeinen Aufwandmengen im Bereich von 0,01 g bis 49 g Wirkstoff pro Hektar, insbesondere 0,01 g bis 9 g Wirkstoff pro Hektar, vorzugsweise zwischen 0,1 g und 5 g pro Hektar.

Die Wirkstoffe der Formel (I) und deren Salze weisen eine ausgezeichnete Selektivität in Leguminosen auf, wobei überraschenderweise auch bei niedrigen Wirkstoffdosierungen eine hervorragende Wirkung gegen die in Leguminosen typisch auftretenden Schadpflanzen erhalten bleibt. Insbesondere werden in Kulturen von Leguminosen vorkommende, oft schwer bekämpfbare Schadpflanzen wie Spezies der Gattungen Amaranthus, Echinochloa, Sorghum, Ipomoea, Pharbitis, Solanum, Setaria, Brachiaria, Lolium, Euphorbia, Abutilon wirksam bekämpft.

Außerdem weisen die Verbindungen eine ausgezeichnete Wirkung bei nichtselektiver Anwendung, z.B. in Dauer- und Plantagenkulturen oder an Wegrändern, Plätzen, Industrieanlagen, Flugplätzen oder Eisenbahnanlagen oder bei der Burn-down-Anwendung auf.

### Biologische Beispiele

### 1. Unkrautwirkung im Vorauflauf

Samen bzw. Rhizomstücke von mono- und dikotylen Unkrautpflanzen wurden in Papptöpfen in sandiger Lehmerde ausgelegt und mit Erde abgedeckt. Die in Form von benetzbaren Pulvern oder Emulsionskonzentraten formulierten Verbindungen der Formel (I) oder deren Salze wurden dann als wäßrige Suspensionen bzw. Emulsionen mit einer Wasseraufwandmenge von umgerechnet 600 bis 800 l/ha in unterschiedlichen Dosierungen auf die Oberfläche der Abdeckerde appliziert.

Nach der Behandlung wurden die Töpfe im Gewächshaus aufgestellt und unter guten Wachstumsbedingungen für die Unkräuter gehalten. Die optische Bonitur der Pflanzen- bzw. Auflaufschäden erfolgte nach dem Auflaufen der Versuchspflanzen nach einer Versuchszeit von 3 bis 4 Wochen im Vergleich zu unbehandelten Kontrollen. Wie die Ergebnisse zeigen, weisen die getesteten Verbindungen eine gute herbizide Vorauflaufwirksamkeit gegen ein breites Spektrum von Ungräsern und Unkräutern auf. Beispielsweise haben die Verbindungen Nr. I-1, I-3, I-8, I-9, I-10, I-11, I-12, I-14, I-21, I-22, I-23, I-29, I-30, I-51, I-52, I-60, I-70, I-142, I-143, I-145 und andere Verbindungen aus Tabelle 1 sehr gute herbizide Wirkung gegen Schadpflanzen wie Sinapis alba, Chrysanthemum segetum, Avena sativa, Stellaria media, Echinochloa crus-galli, Lolium multiflorum, Setaria viridis, Abutilon theophrasti, Amaranthus retroflexus, Brachiaria plantaginea, Solanum nigrum, Euphorbia heterophylla, Sorghum halepense und Panicum miliaceum im Vorauflaufverfahren bei einer Aufwandmenge von 100 g und weniger Aktivsubstanz pro Hektar.

### 2. Unkrautwirkung im Nachauflauf

Samen bzw. Rhizomstücke von mono- und dikotylen Unkräutern wurden in Plastiktöpfen in sandigem Lehmboden ausgelegt, mit Erde abgedeckt und im Gewächshaus unter guten Wachstumsbedingungen angezogen. Drei Wochen nach der Aussaat wurden die Versuchspflanzen im Dreiblattstadium behandelt. Die als Spritzpulver bzw. als Emulsionskonzentrate formulierten Verbindungen der Formel (I) oder deren Salze wurden in verschiedenen Dosierungen mit einer Wasseraufwandmenge von umgerechnet 600 bis 800 l/ha auf die grünen Pflanzenteile gesprüht. Nach ca. 3 bis 4 Wochen Standzeit der Versuchspflanzen im Gewächshaus unter optimalen Wachstumsbedingungen wurde die Wirkung der Präparate optisch im Vergleich zu unbehandelten Kontrollen bonitiert. Die getesteten Verbindungen weisen auch im Nachauflauf eine gute herbizide Wirksamkeit gegen ein breites Spektrum wirtschaftlich wichtiger Ungräser und Unkräuter auf. Beispielsweise haben die Verbindungen Nr. I-1, I-3, I-8, I-9, I-10, I-11, I-12, I-14, I-21, I-22, I-23, I-29, I-30, I-51, I-52, I-60, I-70, I-142, I-143, I-145 und andere Verbindungen aus Tabelle 1 sehr gute herbizide Wirkung gegen Schadpflanzen wie Sinapis alba, Echinochloa crus-galli, Lolium multiflorum, Chrysanthemum segetum, Setaria viridis, Abutilon theophrasti, Amaranthus retroflexus, Panicum miliaceum, Brachiaria plantaginea, Solanum nigrum, Euphorbia heterophylla, Sorghum halepense und Avena sativa im Nachauflaufverfahren bei einer Aufwandmenge von 100 g und weniger Aktivsubstanz pro Hektar. Beispielsweise zeigt die Verbindung I-9 bei einer Aufwandmenge von 30 g Aktivsubstanz pro Hektar eine herbizide Wirkung von 100 % gegenüber Echinochloa crus galli, von 100 % gegenüber Brachiaria plantaginea, von 100 % gegenüber Setaria viridis, von 93 % Amaranthus retroflexus und von 100 % gegenüber Solanum nigrum.

### 3. Kulturpflanzenverträglichkeit

In weiteren Versuchen im Gewächshaus wurden Samen einer größeren Anzahl von Kulturpflanzen und Unkräutern in sandigem Lehmboden ausgelegt und mit Erde abgedeckt. Ein Teil der Töpfe wurde sofort wie unter Abschnitt 1 beschrieben behandelt, die übrigen im Gewächshaus aufgestellt, bis die Pflanzen zwei bis drei echte Blätter entwickelt haben und dann wie unter Abschnitt 2 beschrieben mit den Verbindungen der Formel (I) oder deren Salzen in unterschiedlichen Dosierungen besprüht. Vier bis fünf Wochen nach der Applikation und Standzeit im Gewächshaus wurde mittels optischer Bonitur festgestellt, daß die getesteten Verbindungen, beispielsweise die Verbindungen I-1, I-3, I-8, I-9, I-10, I-11, I-12, I-14, I-21, I-22, I-23, I-29, I-30, I-51, I-52, I-60, I-70, I-142, I-143, I-145 und andere Verbindungen aus Tabelle 1 Leguminosen-Kulturen wie Soja im Vor- und Nachauflaufverfahren ungeschädigt ließen. Beispielsweise zeigt Verbindung I-9 bei einer Aufwandmenge von 8 g Aktivsubstanz pro Hektar 0 % Schädigung an Soja (Glycine max.).

## Patentansprüche

1. Verwendung einer oder mehrerer Verbindungen der allgemeinen Formel (I) und deren Salzen zur nicht-selektiven Bekämpfung von unerwünschtem Pflanzenwuchs 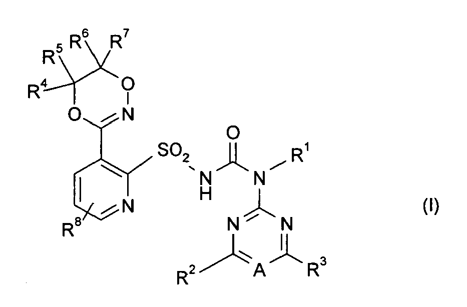 worin
A für Stickstoff oder eine CR¹¹-Gruppierung steht,
wobei
R¹¹ für Wasserstoff, Alkyl, Halogen und Haloalkyl steht,
R¹ für Wasserstoff oder einen gegebenenfalls substituierten Rest aus der Reihe Alkyl, Alkoxy, Alkoxyalkyl, Alkenyl, Alkinyl, Cycloalkyl, Cycloalkylalkyl, Aralkyl und Aryl steht,
R² für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
R³ für Wasserstoff, Halogen oder für jeweils gegebenenfalls durch Halogen substituiertes Alkyl, Alkoxy, Alkylthio, Alkylamino oder Dialkylamino mit jeweils 1 bis 6 Kohlenstoffatomen steht,
R⁴-R⁷ unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen stehen,
R⁸ für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl, Alkylaminocarbonyl mit jeweils 1 bis 3 Kohlenstoffatomen steht,
wobei in den vorgenannten Resten die Alkyl- und Alkylengruppen jeweils 1 bis 6 C-Atome, die Alkenyl- und Alkinylgruppen jeweils 2 bis 6 C-Atome, die Cycloalkylgruppen jeweils 3 bis 6 C-Atome und die Arylgruppen jeweils 6 bzw. 10 C-Atome enthalten können.

2. Verwendung gemäß Anspruch 1, wobei in Formel (I)
A für Stickstoff oder eine CH-Gruppierung steht,
R¹ für Wasserstoff oder einen gegebenenfalls durch Halogen substituierten Rest aus der Reihe Alkyl, Alkoxy, Alkoxyalkyl, Alkenyl und Alkinyl mit jeweils bis zu 3 Kohlenstoffatomen steht,
R² für Wasserstoff, Halogen oder für jeweils gegebenenfalls durch Halogen substituiertes Alkyl, Alkoxy, Alkylthio, Alkylamino oder Dialkylamino mit jeweils 1 bis 3 Kohlenstoffatomen in den Alkylresten steht,
R³ für Wasserstoff, Halogen oder für jeweils gegebenenfalls durch Halogen substituiertes Alkyl, Alkoxy, Alkylthio, Alkylamino oder Dialkylamino mit jeweils 1 bis 3 Kohlenstoffatomen in den Alkylresten steht,
R⁴-R⁷ unabhängig voneinander für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl oder Alkylaminocarbonyl mit jeweils 1 bis 3 Kohlenstoffatomen in den Alkylresten steht,
R⁸ für Wasserstoff, Halogen, Cyano, Thiocyanato oder für jeweils gegebenenfalls durch Halogen substituiertes Alkyl, Alkoxy, Alkylthio, Alkylsulfinyl, Alkylsulfonyl, Alkylamino, Alkylcarbonyl, Alkoxycarbonyl oder Alkylaminocarbonyl mit jeweils 1 bis 3 Kohlenstoffatomen in den Alkylresten steht.

3. Verwendung gemäß Anspruch 1, wobei in Formel (I)
A für Stickstoff oder eine CH-Gruppierung steht,
R¹ für Wasserstoff, Methyl, Ethyl, Methoxy, Methoxymethyl oder Ethoxy steht,
R² für Wasserstoff, Chlor, Methyl, Ethyl, Trifluoromethyl, Methoxy, Ethoxy, Difluoromethoxy, Methylthio, Methylamino oder Dimethylamino steht,
R³ für Wasserstoff, Chlor, Methyl, Ethyl, Trifluoromethyl, Methoxy, Ethoxy, Difluoromethoxy, Methylthio, Methylamino oder Dimethylamino steht,
R⁴ - R⁷ unabhängig voneinander für Wasserstoff, Fluor, Chlor, Cyano, oder für jeweils gegebenenfalls durch Chlor oder Fluor substituiertes Methyl, Methylthio, Methylsulfinyl, Methylsulfonyl, Methoxycarbonyl und Ethoxycarbonyl steht,
R⁸ für Wasserstoff, Fluor, Chlor, Brom, Cyano oder für jeweils gegebenenfalls durch Chlor oder Fluor substituiertes Methyl, Methoxy, Ethoxy, Methylthio, Ethylthio, Methylsulfinyl, Ethylsulfinyl, Methylsulfonyl, Ethylsulfonyl, Methyl- oder Dimethylamino steht.

4. Verwendung gemäß einem oder mehreren der Ansprüche 1 - 3, zur Bekämpfung von Unkräutern und unerwünschten Kulturpflanzen.

5. Verwendung gemäß einem oder mehreren der Ansprüche 1 - 4, worin die Verbindungen der Formel (I) und deren Salze auf die aufgelaufenen Schadpflanzen appliziert werden.

6. Verfahren zur nicht-selektiven Bekämpfung von unerwünschtem Pflanzenwuchs, wobei eine oder mehrere Verbindungen der Formel (I) und deren Salze, wie in einem oder mehreren der Ansprüche 1 - 3 definiert, auf die Pflanzen, das Saatgut oder die Fläche, auf der die Pflanzen wachsen, appliziert werden.

7. Verfahren gemäß Anspruch 6, worin die unerwünschten Pflanzen Unkräuter oder unerwünschte Kulturpflanzen sind.

8. Verfahren gemäß einem oder mehreren der Ansprüche 7 - 8, worin die Verbindungen der Formel (I) und deren Salze auf die aufgelaufenen Schadpflanzen appliziert werden.
